Europäisches Patentamt

European Patent Office

Office européen des brevets

(11) Publication number : **0 519 667 A1**

(12) **EUROPEAN PATENT APPLICATION**

(21) Application number : 92305473.8

(22) Date of filing : 15.06.92

(51) Int. Cl.$^5$ : **H04N 7/10, H04N 5/60**

(30) Priority : **21.06.91 JP 150545/91**

(43) Date of publication of application :
**23.12.92 Bulletin 92/52**

(84) Designated Contracting States :
**DE GB SE**

(71) Applicant : **PIONEER ELECTRONIC CORPORATION**
**No. 4-1, Meguro 1-chome**
**Meguro-ku Tokyo 153 (JP)**

(72) Inventor : **Kikuchi, Ryuji, c/o Pioneer Electronic Corp.**
**Ohmori Works, 15-5, Ohmorinishi 4-chome Ohta-ku, Tokyo (JP)**

(74) Representative : **Brunner, Michael John et al GILL JENNINGS & EVERY 53-64 Chancery Lane London WC2A 1HN (GB)**

(54) **CATV terminal apparatus receiving a two-carrier-type broadcast signal.**

(57) A video intermediate frequency signal and an audio intermediate frequency signal are separated from an intermediate frequency signal, and provided to a demodulator (14). The demodulator (14) demodulates the video intermediate frequency signal and an analog audio intermediate frequency signal of the audio intermediate frequency signal into a video baseband signal and an analog audio baseband signal, respectively, and outputs the resultant signals to an RF modulator (16). Further, the demodulator (14) provides the audio intermediate frequency signal to a NICAM filter (18). The NICAM filter (18) separates only a digital audio intermediate frequency signal including a digital audio carrier from the audio intermediate frequency signal. A muting circuit (20) is interposed between the NICAM filter (18) and the RF modulator (16), and has a function of interrupting passage of the digital audio intermediate frequency signal from the NICAM filter (18) to the RF modulator (16) based on a detection signal from a NICAM signal detecting circuit (19), which detects presence or absence of the digital audio intermediate frequency signal in the audio intermediate frequency signal.

FIG. 3

EP 0 519 667 A1

Jouve, 18, rue Saint-Denis, 75001 PARIS

The present invention relates to a terminal apparatus to be installed on the receiving side of a CATV (community antenna television, common antenna television or cable television) system. More particularly, the invention is directed to an audio beat eliminating circuit suitable for a CATV terminal apparatus which receives an audio-multiplexed broadcast signal or a stereophonic broadcast signal of two-carrier type.

In the two-carrier-type audio-multiplexed broadcast (or stereophonic broadcast) system, in addition to a conventional audio carrier (first audio carrier), another audio carrier (second audio carrier) is employed whose frequency is higher than the first audio carrier. In this system, the first audio carrier is assigned to a main audio signal ((L+R)/2 signal in the case of the stereophonic broadcast), and the second audio carrier to an auxiliary audio signal (R signal or (L-R)/2 signal in the case of the stereophonic broadcast).

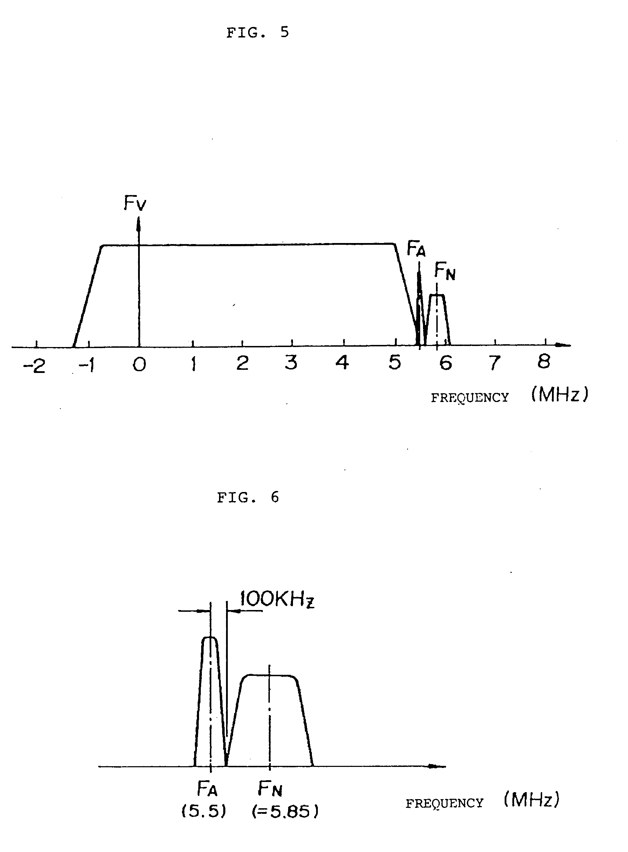

Presently known as a variation of the two-carrier-type system is the NICAM system in which the second audio carrier is a digital audio carrier. Fig. 5 shows the frequency distribution employed in the audio-multiplexed (or stereophonic) broadcast of the NICAM system. In Fig. 5, symbols $F_V$, $F_A$ and $F_N$ represent a video carrier frequency, analog audio carrier frequency and digital audio carrier frequency, respectively.

Referring to Fig. 5, in the PAL-I system the analog audio carrier frequency $F_A$ is located at 6 MHz and the digital audio carrier frequency $F_N$ at 6.552 MHz, while in the PAL-B and PAL-G systems the analog audio carrier frequency $F_A$ is located at 5.5 MHz and the digital audio carrier frequency $F_N$ at 5.85 MHZ.

A CATV terminal apparatus that can receive a television signal of the NICAM system and reproduce a digital audio signal is disclosed in Japanese Patent Application Unexamined Publication No. Hei. 3-80685 (which corresponds to British Patent Application Unexamined Publication No. 2,237,710). In this CATV terminal apparatus, a video intermediate frequency signal and an audio intermediate frequency signal are separated from an intermediate frequency signal of a CATV television signal transmitted from a broadcasting center, and then temporarily demodulated into baseband signals. After the audio baseband signal is subjected to volume control or muting control, analog and digital audio baseband signals are incorporated into the video baseband signal, and finally the resultant combined signal is modulated into an RF signal and sent to a TV receiver.

The above CATV terminal apparatus has the problem that the analog audio baseband signal sent from a demodulator to an RF modulator and an analog audio signal component carried by the separated digital audio signal interfere with each other in the RF modulator to possibly cause an audio beat.

This is explained below more specifically. In the above CATV terminal apparatus, an audio intermediate frequency signal including both an analog audio signal component and a digital audio signal component is output from a split output terminal of an IC (e.g., CXA1110BS of SONY CORP.) which constitutes the demodulator, and only the digital audio signal component is separated by a bandpass filter (BPF) from the audio intermediate frequency signal thus output. Fig. 6 shows details of the frequency distribution of these audio signals. Referring to Fig. 6, in the PAL-B and PAL-G systems, the difference between the analog audio carrier frequency $F_A$ and the digital audio carrier frequency $F_N$ is 350 kHz. And if the frequency band of the digital audio signal (i.e., its descending portion) is considered, the difference is decreased to about 100 kHz. With such a small frequency difference, in the BPF to extract the digital audio signal component it is extremely difficult to obtain such filtering performance that the analog audio signal component is sufficiently attenuated and no loss occurs in the necessary frequency band of the digital audio signal component. Only a filter having a very steep attenuation characteristic can attain such performance. For this reason, the output signal (i.e., digital audio signal component) of the BPF unavoidably includes a slight analog audio signal component, which is undesirably introduced into the RF modulator. If there exists a slight difference between the carrier frequency of such a slight analog audio signal component and the frequency of an oscillator for the frequency modulation of the analog audio signal from the demodulator, the slight analog audio signal component interferes with the analog audio signal from the demodulator, causing an audio beat as mentioned above. The audio beat thus generated is output from a speaker of a TV receiver in the form of a sound whose frequencies are within the audible frequency band of a human, and which is offensive to the ear.

An object of the invention is to provide a CATV terminal apparatus of the NICAM system, which can suppress generation of an audio beat.

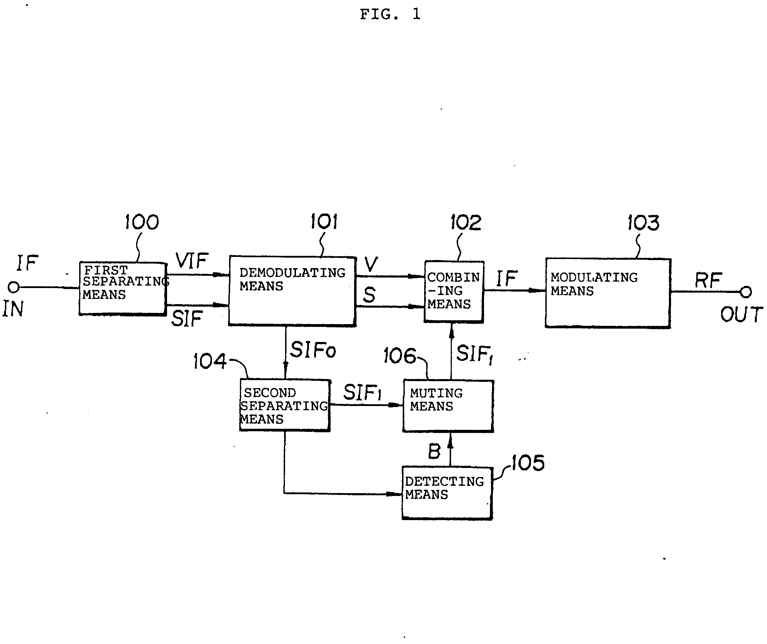

To solve the above problems, as shown in Fig. 1, a CATV terminal apparatus of the invention comprises:

first separating means 100 for separating a video intermediate frequency signal VIF and an audio intermediate frequency signal SIF from an intermediate frequency signal IF of an input CATV television signal;

demodulating means 101 for detecting the video intermediate frequency signal VIF and the audio intermediate frequency signal $SIF_0$ from the first separating means 100, and for demodulating the detected signals into a video baseband signal V and an analog audio baseband signal S, respectively;

second separating means 104 for separating a digital audio intermediate frequency signal $SIF_1$ from the audio intermediate frequency signal $SIF_0$ from the first separating means 101;

combining means 102 for frequency-modulating the analog audio baseband signal S and combining the analog audio FM signal with the video baseband signal V from the demodulating means 101, and for incorporating the digital audio intermediate frequency signal $SIF_1$ from the second separating means 104 into the thus combined signal and outputting the resultant signal; and

modulating means 103 for amplitude-modulating the combined signal from the combining means 102 and outputting the resultant signal; and said CATV terminal apparatus further comprises:

detecting means 105 for detecting presence or absence of the digital audio intermediate frequency signal $SIF_1$ in the audio intermediate frequency signal SIF; and

muting means 106 for prohibiting signal passage from the second separating means 104 to the combining means 102 when a detection signal B from the detecting means 105 indicates absence of the digital audio intermediate frequency signal $SIF_1$ in the audio intermediate frequency signal SIF.

According to the invention, the intermediate frequency signal IF of the TV signal transmitted from the broadcasting center is input to the first separating means 100. The first separating means 100 separates from the intermediate frequency signal IF the video intermediate frequency signal VIF and the audio intermediate frequency signal SIF, and supplies the separated signals VIF and SIF to the demodulating means 101. The audio intermediate frequency signal SIF at this stage is the signal $SIF_0$ consisting of the analog intermediate frequency signal including the analog audio carrier of frequency $F_A$ and the digital intermediate frequency signal including the digital audio carrier of frequency $F_N$. The demodulating means 101 demodulates the supplied video intermediate frequency signal VIF and the analog audio intermediate frequency signal of the supplied audio intermediate frequency signal $SIF_0$ into the video baseband signal V and the analog audio baseband signal S, respectively, and outputs the resultant signals V and S to the combining means 102. Since the analog audio baseband signal S is subjected to, for instance, level adjustment in the demodulating means 101, the volume adjustment in a TV receiver is not necessary. Further, the demodulating means 101 provides the audio intermediate frequency signal $SIF_0$ to the second separating means 104. The second separating means 104 separates only the digital audio signal component including the digital audio carrier of frequency $F_N$ from the supplied audio intermediate frequency signal $SIF_0$, and outputs the signal $SIF_1$ having the separated digital audio signal component. The muting means 106 is interposed between the output terminal of the second separating means 104 and the input terminal of the combining means 102, and has a function of interrupting passage of the signal $SIF_1$ from the second separating means 104 to the combining means 102 based on the detection signal B from the detecting means 105. The detecting means 105 detects presence or absence of the digital audio carrier of frequency $F_N$ in the audio intermediate frequency signal $SIF_0$, to produce the detection signal B. As a result, since the muting means 106 interrupts the signal passage from the second separating means 104 to the combining means 102 when the digital audio carrier of frequency $F_N$ is not present in the audio intermediate frequency signal $SIF_0$, an analog audio carrier frequency leak component $\Delta F_A$ of a very small level, which is mixed in the output signal $SIF_1$ of the second separating means 104, can be prevented from being provided to the combining means 102. In other words, even if the digital audio carrier of frequency $F_N$ is not present in the audio intermediate frequency signal $SIF_0$, the analog audio carrier frequency component $\Delta F_A$ still leaks from the second separating means 104. Therefore, according to the invention, the muting means 106 intervenes to isolate the second separating means 104 when the digital audio carrier of frequency $F_N$ is not present. The combining means 102 combines the video baseband signal V, the frequency-modulated signal of the analog audio baseband signal S, and the signal $SIF_1$, and the modulating means 103 modulates the combined signal into an RF signal. This RF signal is sent to the TV receiver.

In the accompanying drawings:-
Fig. 1 is a diagram illustrative of the principle of the invention;
Fig. 2 is a block diagram of an entire CATV system;
Fig. 3 is a block diagram showing the outline of a two-carrier -type CATV terminal apparatus according to the invention;
Fig. 4 is a circuit diagram showing an embodiment of the invention;
Fig. 5 is a diagram illustrative of a frequency distribution of a two-carrier-type, audio-multiplexed broadcast signal; and
Fig. 6 is a diagram illustrative of details of the frequency distribution of audio signals.

A preferred embodiment of the present invention is described below with reference to the accompanying drawings.

## (i) Outline of CATV System

To facilitate the understanding of the invention, a CATV system to which a CATV terminal apparatus of the invention is applied is briefly described.

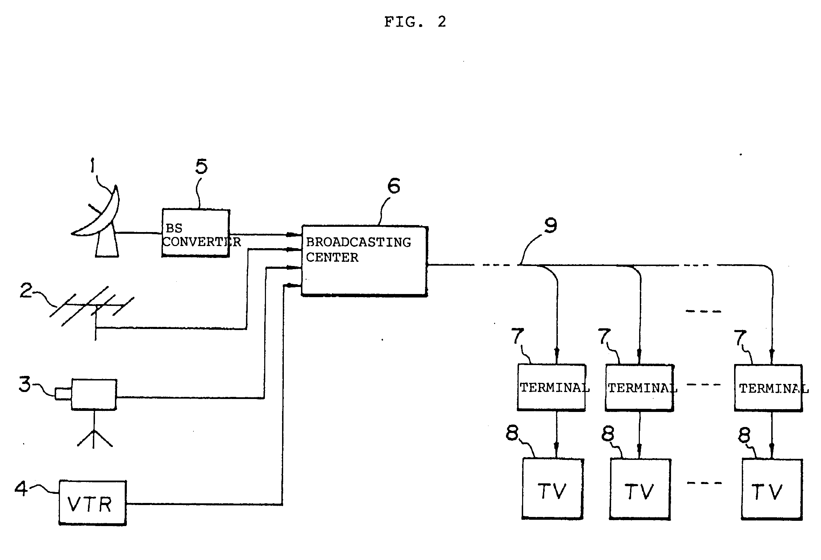

Fig. 2 shows a general configuration of a CATV system. A broadcasting center 6 receives commercial broadcast programs by a BS antenna 1 and a BS converter 5 or a TV antenna 2, or produces own broadcast programs using a TV camera 3 or a VTR 4, and distributes such programs to users through transmission cables 9. Generally, respective users are given the distribution services on contract, and thus charged accordingly. On each user's side, a transmitted CATV television signal, which has been scrambled to prevent pirate viewing, is received by a CATV terminal apparatus 7, and subjected to descrambling etc. therein, and then sent to a TV receiver 8. The invention relates to an improvement of the CATV terminal apparatus 7 in the above system.

(ii) CATV Terminal Apparatus

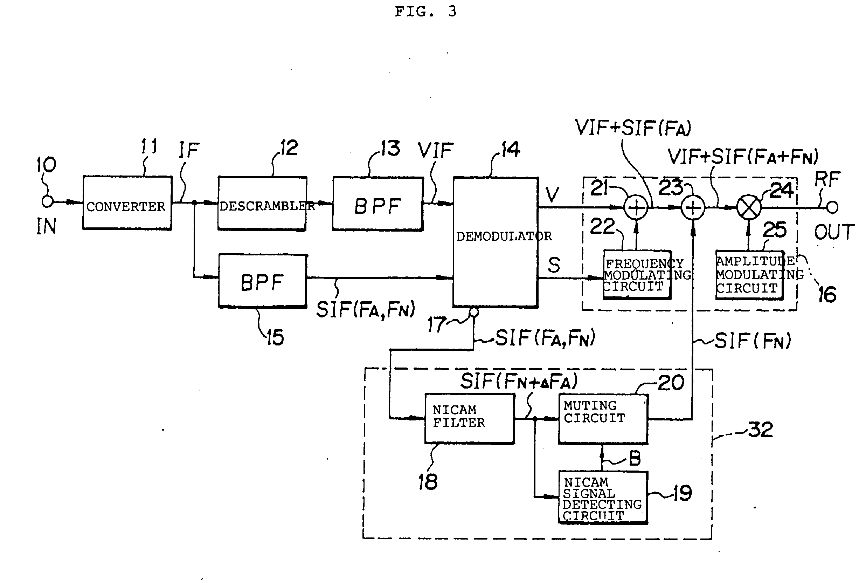

Fig. 3 shows a CATV terminal apparatus according to an embodiment of the invention. In Fig. 3, multichannel (50 to 500 MHz) TV signals transmitted from the broadcasting center 6 (see Fig. 2) come to an input terminal 10, and are provided to a converter 11. The converter 11 selects a signal of a desired channel from the TV signals thus provided, frequency-converts the selected TV signal into an intermediate frequency signal IF, which is fed to both a descrambler 12 and a bandpass filter (BPF) 15.

The descrambler 12 descrambles the intermediate frequency signal IF by extracting, by AM detection, scrambling data that is superimposed as in-band data on an audio intermediate frequency signal SIF of the intermediate frequency signal IF, and expanding portions of a video intermediate frequency signal VIF based on the extracted scrambling data. The descrambled intermediate frequency signal IF is applied to a BPF 13.

The BPF 13 is a filter for separating the video intermediate frequency signal VIF from the descrambled intermediate frequency signal IF, and its passband is determined in accordance with the video carrier frequency $F_V$ shown in Fig. 5. The separated video intermediate frequency signal VIF is fed to a demodulator 14.

The BPF 15 is a filter for separating the audio intermediate frequency signal SIF from the intermediate frequency signal IF provided from the converter 11, and its passband is determined so as to include the analog audio carrier frequency $F_A$ and the digital audio carrier frequency $F_N$ (see Fig. 5), which means that the audio intermediate frequency signal SIF output from the BPF 15 includes both the analog audio carrier of frequency $F_A$ and the digital audio carrier of frequency $F_N$. This audio intermediate frequency signal SIF is fed to the demodulator 14.

The demodulator 14 produces, by synchronous detection, a video baseband signal V from the video intermediate frequency signal VIF. Further, the demodulator 14 outputs an analog audio baseband signal S by intercarrier-detecting the audio intermediate frequency signal SIF, filters the detected audio intermediate frequency signal SIF by a BPF to separate only the analog audio signal component including the analog audio carrier of frequency $F_A$, and by subjecting the separated analog audio signal component to FM detection. The resultant video baseband signal V and the analog audio baseband signal S are supplied to an RF modulator 16. The FM-detected analog audio baseband signal S can now be subjected to volume control or muting control based on a control signal externally applied from an audio control circuit, and this is why the video baseband signal V and the analog audio baseband signal S are produced by the demodulator 14. Finding no direct relevance to the invention, such control will no further be described. The intercarrier-detected audio intermediate frequency signal SIF($F_A$, $F_N$) is output from a split output terminal 17 of the demodulator 14, and provided to a digital audio signal processing circuit 32.

The digital audio signal processing circuit 32 includes the following circuit components. A NICAM filter 18 separates the digital audio intermediate frequency signal SIF($F_N$) from the applied audio intermediate frequency signal SIF($F_A$, $F_N$) and provides the separated signal to the RF modulator 16. A NICAM signal detecting circuit 19 detects whether the digital audio carrier of frequency $F_N$ is present in the applied audio intermediate frequency signal SIF($F_A$, $F_N$). A muting circuit 20 interrupts, based on a detection signal B from the NICAM signal detecting circuit 19, passage to the RF modulator 16 of a signal appearing at the output terminal of the NICAM filter 18, i.e., a leak component $\Delta F_A$, if the digital audio carrier of frequency $F_N$ is not included in the applied audio intermediate frequency signal SIF($F_A$, $F_N$).

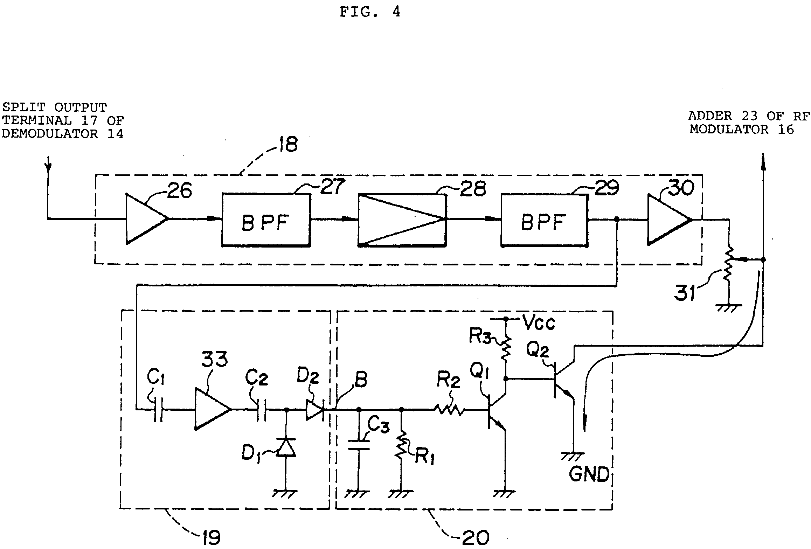

A specific example of the digital audio signal processing circuit 32 is shown in Fig. 4. The NICAM filter 18 has BPFs 27, 29 for separating the digital audio intermediate frequency signal SIF($F_N$) from the audio intermediate frequency signal SIF($F_A$, $F_N$). The BPFs 27, 29 has a bandpass characteristic which permits passage of only the digital audio signal component including the digital audio carrier of frequency $F_N$. A limiter amplifier 28 is interposed between the BPFs 27, 29, to suppress the resultant digital audio signal component to a predetermined level. Reference numerals 26, 30 denote buffer amplifiers. The output terminal of the buffer amplifier 30 is connected to an attenuator 31 for adjusting the output level of the digital audio intermediate frequency signal SIF($F_N$). The output terminal of the attenuator 31 is connected to an adder 23 of the RF modulator 16 so that the digital audio intermediate frequency signal SIF($F_N$) separated by the NICAM filter 18 is applied to the adder 23. The output terminal of the BPF 29 is connected to the input terminal of the NICAM signal detecting circuit 19.

The NICAM signal detecting circuit 19 includes coupling capacitors $C_1$, $C_2$, a buffer amplifier 33, and diodes $D_1$, $D_2$. The diodes $D_1$, $D_2$ constitute a detecting circuit (or a rectifying circuit), which detects the digital audio intermediate frequency signal SIF($F_N$) to produce a DC detection signal B to be provided to the muting circuit 20.

The muting circuit 20 is a switching circuit including npn-type bipolar transistors $Q_1$, $Q_2$. Reference character $C_3$ denotes a high-cut capacitor; $R_1$, a bias resistor; $R_2$, a limiting base resistor; and $R_3$, a load resistor. In the muting circuit 20, when the DC detection signal B from the NICAM signal detecting circuit 19 is at the "H" level, i.e., when the signal from the split output terminal 17 includes the digital audio carrier of frequency $F_N$, the transistor $Q_1$ turns on. This causes the collector potential of the transistor $Q_1$ to drop to the ground level, which turns the transistor $Q_2$ off. Since, in this case, the output terminal of the attenuator 31 is not short-circuited to the ground level GND, no muting operation is performed.

On the other hand, when the detection signal B from the NICAM signal detecting circuit 19 is at the "L" level, i.e., when the digital audio carrier of frequency $F_N$ component is not included in the signal from the split output terminal 17, the transistor $Q_1$ turns off and the transistor $Q_2$ turns on. This causes the output terminal of the attenuator 31 to short-circuited through a path indicated by the arrow to the ground level GND, thus interrupting signal supply from the attenuator 31 to the adder 23 of the RF modulator 16. If the muting circuit 20 is not inserted, the output signal of the attenuator 31 does not carry the digital audio signal component, but it does carry a leak component $\Delta F_A$ of the analog audio carrier of frequency $F_A$ of a very small level because of the cutoff characteristic of the BPFs 27, 29 and of a small difference between the analog audio carrier frequency $F_A$ and the digital audio carrier frequency $F_N$. This will cause a beat component at subsequent stages. On the other hand, according the circuit of the invention, when the digital audio carrier of frequency $F_N$ is not present, the output terminal of the attenuator 31 is short-circuited to the ground level GND, i.e., the muting operation is effected, so that the leak component $\Delta F_A$ is never introduced to the RF modulator 16 through the adder 23. Accordingly, the generation of an audio beat can be obviated.

If the audio intermediate frequency signal SIF carries the digital audio carrier of frequency $F_N$, the leak component $\Delta F_A$ is undesirably introduced to the RF modulator 16 while carried by the digital audio carrier of frequency $F_N$, thereby causing an audio beat. However, by virtue of incorporation of the limiter amplifier 28 in the NICAM filter 18, the level of the leak component $\Delta F_A$ is limited together with the digital audio intermediate frequency signal $SIF(F_N)$, so that the component $\Delta F_A$ to be introduced to the adder 23 is suppressed. Further, a beat sound caused by the leak component $\Delta F_A$ is masked by the reproduction sound of the digital audio intermediate frequency signal $SIF(F_N)$. For these reasons, there will occur no practical problems in conjunction with the leak component $\Delta F_A$.

Returning to Fig. 3, the RF modulator 16 includes an adder 21 and a frequency modulating circuit 22. The analog audio baseband signal S is frequency modulated by the modulating circuit 22 and added by the adder 21 to the video baseband signal V from the demodulator 14. A combined signal $(VIF + SIF(F_A))$ generated at the adder 21 is provided to the adder 23. The adder 23 adds the signal $SIF(F_N + \Delta F_A)$ from the NICAM filter 18 to the combined signal $(VIF + SIF(F_A))$ from the adder 21 to generate another combined signal $(VIF + SIF(F_A + F_N))$, which is supplied to a mixer 24. The mixer 24 and an amplitude modulating circuit 25 work to amplitude-modulate the combined signal, and outputs an RF signal, which is sent to the TV receiver 8 (Fig. 2).

Although the component of frequency $F_N$ is described as the digital audio signal in the above embodiment, similar discussions will apply even if the component of $F_N$ is the analog audio signal, as long as the relationship between the components of $F_N$ and $F_A$ remains unchanged.

According to the invention, since signal supply to the combining means from the second separating means is prohibited unless the digital audio intermediate frequency signal is included in the audio intermediate frequency signal, the analog audio carrier frequency leak component of a very small level, which is leaked in the second separating means, will never be introduced to the modulating means. As a result, the generation of an audio beat in the modulating means can be suppressed.

**Claims**

1. A CATV terminal apparatus which receives a television signal including a video signal and first and second audio signals carried by audio carriers having different frequencies, and which comprises means (18, 104) for separating a second audio intermediate frequency signal representing the second audio signal from an audio intermediate frequency signal, and means (16, 102) for combining the separated second intermediate frequency signal with remaining signal components, characterized by:

     means (19, 105) for detecting whether the second audio intermediate frequency signal is present in the audio intermediate frequency signal; and

     means (20, 106) for prohibiting passage of the separated second audio intermediate frequency signal to the combining means (16, 102) when the detecting means detects absence of the second intermediate frequency signal.

2. The apparatus of claim 1, characterized in that the first and second audio signals are an analog audio signal and a digital audio signal, respectively.

3. The apparatus of claim 1, characterized in that the first and second audio signals are stereophonic audio signals.

4. The apparatus of claim 1, characterized in that the separating means comprises a limiter amplifier (28) for suppressing the separated second intermediate frequency signal to a predetermined level.

5. A CATV terminal apparatus which receives a two-carrier-type television signal, detects a main audio baseband signal and a video baseband signal, and produces an RF signal to be input to a TV receiver, characterized by:

   means, (19, 105) for detecting whether a sub-audio intermediate frequency signal is present or not; and

   means (20, 106) for muting the sub-audio intermediate frequency signal.

6. The CATV terminal apparatus of claim 5, characterized in that the sub-audio intermediate frequency signal is combined with a signal produced by combining the video baseband signal with a frequency-modulated signal of the main audio baseband signal.

FIG. 1

FIG. 2

BROADCASTING CENTER

BS CONVERTER

TERMINAL

TV

VTR

1 2 3 4 5 6 7 8 9

FIG. 3

EP 0 519 667 A1

FIG. 4

FIG. 5

FIG. 6

EP 0 519 667 A1

**European Patent Office**

# EUROPEAN SEARCH REPORT

Application Number

EP 92 30 5473

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | GB-A-2 237 710 (PIONEER)<br>* abstract; claims 1,2,4; figure 1 *<br>--- | 1-3,5-6 | H04N7/10<br>H04N5/60 |
| Y | PATENT ABSTRACTS OF JAPAN<br>vol. 12, no. 63 (E-585)25 February 1988<br>& JP-A-62 204 674 ( HITACHI ) 9 September 1987<br>* abstract *<br>--- | 1-3,5,6 | |
| A | SYMPOSIUM RECORD - CATV SESSIONS - 16TH INTERNATIONAL TV SYMPOSIUM - MONTREUX - CH - 17-22 JUNE 1989<br>vol. C-1,<br>pages 364 - 370<br>BEST 'Stereo Sound for TV'<br>* page 366, line 11 - line 15; figure 2 *<br>--- | 1,3-6 | |
| A | WO-A-9 103 910 (DEUTSCHE THOMSON BRANDT)<br>* page 2, line 17 - page 3, line 12 *<br>* page 5, line 15 - line 20 *<br>* abstract; figure 1 *<br>--- | 1,2 | |
| A | EP-A-0 374 433 (GRUNDIG)<br>* column 1, line 51 - column 2 *<br>----- | 1-3 | TECHNICAL FIELDS SEARCHED (Int. Cl.5)<br><br>H04N<br>H03G |

The present search report has been drawn up for all claims

| Place of search | Date of completion of the search | Examiner |
|---|---|---|
| THE HAGUE | 14 OCTOBER 1992 | BERWITZ P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

12